# EUROPEAN PATENT APPLICATION

(11) **EP 4 328 904 A1**
(43) Date of publication of application: **28.02.2024**
(21) Application number: 23190107.5
(22) Date of filing: 07.08.2023
(51) Int. Cl.: G10L 15/22, G10L 17/00, G10L 17/04, G10L 17/08, G10L 17/24

(54) **TECHNIQUES FOR AUTHORIZING AND PRIORITIZING COMMANDS DIRECTED TOWARDS A VIRTUAL PRIVATE ASSISTANT DEVICE FROM MULTIPLE SOURCES**

(30) Priority: 24.08.2022 IN 202241048208
(71) Applicant: Harman International Industries, Incorporated, Stamford, CT 06901 (US)
(72) Inventor: TANDON, Nitya, Stamford, 06901 (US); MISTRY, Jigar, Stamford, 06901 (US)
(74) Representative: Rummler, Felix

(57) **Abstract**

Disclosed embodiments include techniques for processing audio commands for a virtual personal assistant. A speech processing system segments speech detected in an audio input signal into a plurality of speech segments wherein the speech included in a given speech segment is uttered by a single speaker. The speech processing system clusters the speech segments included in the plurality of speech segments into a plurality of clusters, wherein each cluster included in the plurality of clusters is uttered by a different speaker. The speech processing system determines that a first cluster included in the plurality of clusters is uttered by a first authorized speaker. The speech processing system causes the virtual personal assistant to execute a first audio command included in the first cluster.

## Description

### BACKGROUND

### Field of the Various Embodiments

Embodiments of the present disclosure relate generally to speech processing systems and, more specifically, to techniques for authorizing and prioritizing commands directed towards a virtual private assistant device from multiple sources.

### Description of the Related Art

Virtual personal assistants (VPAs) are deployed in many modern devices for providing processing of audible commands spoken by a user. Virtual personal assistants are also referred to by different names, such as intelligent virtual assistants (IVAs), intelligent personal assistants (IPAs), and so on. VPAs can be embodied in various forms, including as standalone smart speaker devices, as software application programs executing on a smartphone or other computer device, as an embedded component in an automotive system that features vehicle navigation, driver-assistance, and/or infotainment, and so on. A user with a VPA generally speaks an audio command that is within range of a microphone or other audio input device of the VPA. The VPA receives audio sound waves, digitizes the audio sound waves, and extracts the audio command from the audio sound waves. The VPA performs the audio command based on how the VPA is programmed to respond to various spoken words. For example, VPAs can be programmed to respond to various audio commands to perform day-to-day tasks for the user, such as keeping track of task lists, calling or texting people included in the user's contact list, playing video and/or audio content from a media store, answering questions, and so on.

One potential drawback with VPAs is that VPAs indiscriminately respond to all audio commands received via the audio input. In some cases, multiple people may be speaking, or another audio source may be playing in the vicinity of the VPA. In response, the VPA attempts to process the audio input received from all speakers and audio sources. The VPA interprets all words extracted from the audio input and performs any audio commands that the VPA determines from the extracted words. This can lead to unreliable, ambiguous, undesirable, unintended, and/or contradictory results.

As the foregoing illustrates, improved techniques for processing speech input for a virtual personal assistant device would be useful.

### SUMMARY

Various embodiments of the present disclosure set forth a computer-implemented method for processing audio commands for a virtual personal assistant. The method includes segmenting speech detected in an audio input signal into a plurality of speech segments wherein the speech included in a given speech segment is uttered by a single speaker. The method further includes clustering the speech segments included in the plurality of speech segments into a plurality of clusters, wherein each cluster included in the plurality of clusters is uttered by a different speaker. The method further includes determining that a first cluster included in the plurality of clusters is uttered by a first authorized speaker. The method further includes causing a first audio command included in the first cluster to execute.

Other embodiments include, without limitation, a system that implements one or more aspects of the disclosed techniques, and one or more computer readable media including instructions for performing one or more aspects of the disclosed techniques.

At least one technical advantage of the disclosed techniques relative to the prior art is that with the disclosed techniques, a speech processing system is able to eliminate audio commands uttered by unintended sources. As a result, the likelihood that the speech processing system executes unintended or undesired audio commands is reduced relative to conventional systems. Further, the speech processing system is able to discard speech from non-authorized users, which provides improved security and safety for the authorized user relative to conventional systems. These technical advantages represent one or more technological improvements over prior art approaches.

### BRIEF DESCRIPTION OF THE DRAWINGS

So that the manner in which the above recited features of the various embodiments can be understood in detail, a more particular description of the inventive concepts, briefly summarized above, may be had by reference to various embodiments, some of which are illustrated in the appended drawings. It is to be noted, however, that the appended drawings illustrate only typical embodiments of the inventive concepts and are therefore not to be considered limiting of scope in any way, and that there are other equally effective embodiments.
Figure 1 is a block diagram of a computing device configured to implement one or more aspects of the various embodiments;
Figure 2 is a block diagram of a speech processing system implemented on the computing device of Figure 1, according to various embodiments;
Figure 3 illustrates an audio input signal directed towards the speech processing system of Figure 2, according to various embodiments;
Figure 4 illustrates diarized audio generated by the speech processing system of Figure 2, according to various embodiments;
Figure 5 illustrates an audio command queue generated by the speech processing system of Figure 2, according to various embodiments;
Figure 6 is a flow diagram of method steps for enrolling an authorized user of a speech processing system, according to various embodiments; and
Figure 7 is a flow diagram of method steps for processing speech input directed towards a virtual personal assistant device, according to various embodiments.

### DETAILED DESCRIPTION

In the following description, numerous specific details are set forth to provide a more thorough understanding of the various embodiments. However, it will be apparent to one of skilled in the art that the inventive concepts may be practiced without one or more of these specific details.

As discussed herein, conventional VPAs attempt to process the audio input received from all human speakers and audio sources. This behavior can lead to various problems. A first problem is that the VPA responds to detected words irrespective of the source of the words. In some cases, two people may be speaking, where the first person intends to speak a voice command for the VPA. The second person may also be speaking, while not intending to speak a voice command for the VPA, but the VPA interprets the words spoken by both speakers as commands. A second problem is that two persons may be speaking simultaneously, where the VPA interprets the words spoken by both speakers as a single command. As a result, the VPA performs a command that neither speaker intended. A third problem is that the VPA can interpret words that are part of a command and can further interpret words not intended as part of the command to be part of a command. These cases, along with other scenarios, can lead to unreliable, ambiguous, undesirable, unintended, and/or contradictory behavior of the VPA.

These undesirable or ambiguous results could lead to serious security issues. In one particular example, a user could be a pedestrian or a driver of a vehicle waiting at a traffic signal when a would-be mugger attempts to rob and/or assault the user. The user speaks an audio command to the VPA to call the police, but then the mugger speaks a second audio command to cancel or disconnect the call. The VPA could interpret the mugger's command as a valid user command. As a result, the VPA could respond by initiating a call to the police and then subsequently cancelling or disconnecting the call. In such situations, the audio command spoken by the user would be overridden by the audio command spoken by the mugger, and the police would not be notified of the crime in progress.

To address these problems, the disclosed embodiments include a speech processing system with a virtual processing assistant that processes an audio input signal, where the audio signal includes speech input directed towards a virtual personal assistant device. The speech processing system receives and digitizes the audio input signal. The speech processing system detects the speech components of the digitized audio input signals, segments the speech components into distinct speech segments by the different speakers, also referred to herein as users, and clusters the speech segments into a different cluster for each user. The speech processing system identifies and discards clusters corresponding to non-authorized persons. The speech processing system prioritizes the remaining clusters and generates an audio command queue that presents the clusters in priority order. The speech processing system processes the audio command queue and executes the commands included therein.

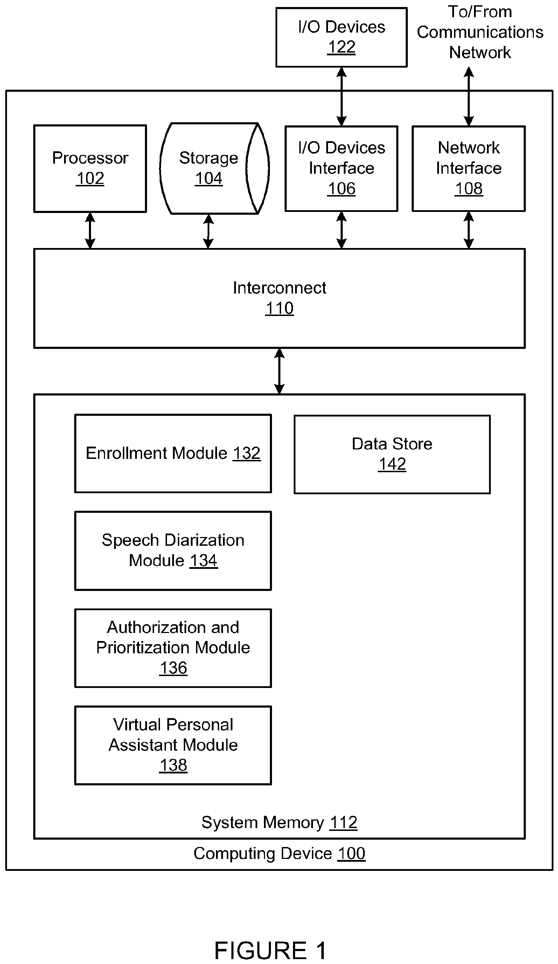

Figure 1 is a block diagram of a computing device 100 configured to implement one or more aspects of the various embodiments. As shown, the computing device 100 includes, without limitation, a processor 102, storage 104, an input/output (I/O) devices interface 106, a network interface 108, an interconnect 110, and a system memory 112.

The processor 102 retrieves and executes programming instructions stored in the system memory 112. Similarly, the processor 102 stores and retrieves application data residing in the system memory 112. The interconnect 110 facilitates transmission, such as of programming instructions and application data, between the processor 102, I/O devices interface 106, storage 104, network interface 108, and system memory 112. The I/O devices interface 106 is configured to receive input data from user I/O devices 122. Examples of user I/O devices 122 can include one or more buttons, a keyboard, a mouse, and/or other pointing device, and/or the like. The I/O devices interface 106 also includes an audio output unit configured to generate an electrical audio output signal, and user I/O devices 122 further include a speaker configured to generate an acoustic output in response to the electrical audio output signal. The I/O devices interface 106 also includes an audio input unit configured to receive an electrical audio input signal, and user I/O devices 122 further include an audio input device configured to generate an analog and/or digital signal representation of an acoustic output in response to receiving the electrical audio input signal. The audio input device could be a microphone, a headset, an input transducer, and/or the like. Another example of a user I/O device 122 is a display device that generally represents any technically feasible means for generating an image for display. For example, the display device could be a liquid crystal display (LCD) display, organic light-emitting diode (OLED) display, or digital light processing (DLP) display.

Processor 102 is included to be representative of a single central processing unit (CPU), multiple CPUs, a single CPU having multiple processing cores, digital signal processors (DSPs), field-programmable gate arrays (FPGAs), graphics processing units (GPUs), tensor processing units, and/or the like. And the system memory 112 is generally included to be representative of a random access memory. The storage 104 may be a disk drive storage device. Although shown as a single unit, the storage 104 may be a combination of fixed and/or removable storage devices, such as fixed disc drives, floppy disc drives, tape drives, removable memory cards, or optical storage, network attached storage (NAS), or a storage area-network (SAN). Processor 102 communicates to other computing devices and systems via network interface 108, where network interface 108 is configured to transmit and receive data via a communications network.

The system memory 112 includes, without limitation, an enrollment module 132, a speech diarization module 134, an authorization and prioritization module 136, a virtual personal assistant module 138, and a data store 142. The enrollment module 132, speech diarization module 134, authorization and prioritization module 136, and virtual personal assistant module 138, when executed by the processor 102, perform one or more operations associated with the techniques further described herein. When performing the operations associated with the disclosed techniques, the enrollment module 132, speech diarization module 134, authorization and prioritization module 136, and virtual personal assistant module 138 store data in and retrieve data from data store 142.

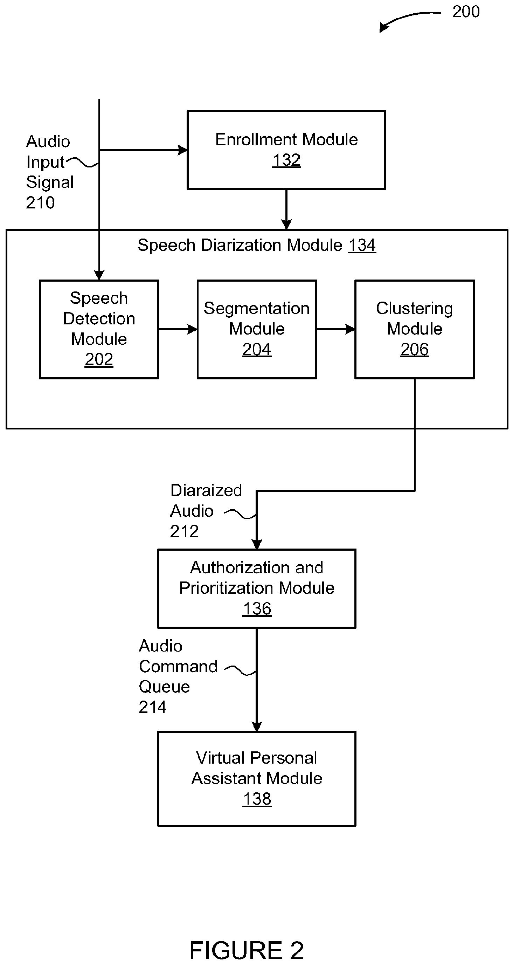

Figure 2 is a block diagram of a speech processing system 200 implemented on the computing device 100 of Figure 1, according to various embodiments. As shown, the speech processing system 200 includes, without limitation, the enrollment module 132, the speech diarization module 134, the authorization and prioritization module 136, and the virtual personal assistant module 138 of Figure 1. The speech processing system 200 executes in two different stages: an enrollment stage and a deployment stage.

During the enrollment stage, the enrollment module 132 prompts a user to speak a number of utterances, such as four or five utterances, to train the speech diarization module 134 on the particular voice features of the user. The enrollment module 132 generates these voice footprints based on these unique voice features of the voice of the user. The enrollment module 132 employs various entropic techniques, such as mel-frequency cepstrum coefficients (MFCC) to generate voice footprints and subsequently identify a specific user from among authorized users. The enrollment module 132 fine tunes the voice footprint by analyzing the speech details and average voice features within the utterances in order to characterize the voice of the user. The enrollment module 132 employs one or both of two types of enrollment: text dependent enrollment and text independent enrollment. With text dependent enrollment, the enrollment module 132 prompts the user to say a particular phrase as a fixed utterance multiple times. After the user repeats the same utterance a number of times, the enrollment module 132 establishes and stores the voice footprint of the user. With text independent enrollment, the enrollment module 132 prompts the user to speak for a period of time. The user can speak any utterances, as long as the user speaks a sufficient amount of time for the enrollment module 132 to characterize the voice of the user. After the user speaks for a sufficient amount of time, the enrollment module 132 establishes and stores the voice footprint of the user. The enrollment module 132 assigns a unique user identifier to the voice footprint and stores the user identifier with the voice footprint. Thereafter, when an incoming speech segment matches the voice footprint, the user who spoke the speech segment is identified via the user identifier assigned to the corresponding voice footprint. Once the user completes the enrollment stage, the user is considered an authorized user, also referred to herein as an enrolled user.

In some examples, the speech processing system 200 could enter the enrollment stage automatically when powered up for the first time. A first user proceeds through the enrollment stage and becomes an authorized user. The authorized user can then speak an enrollment command such as "enroll another user," "initiate enrollment," and/or the like to start the enrollment phase for a second user. The second user then proceeds through the enrollment stage and also becomes an authorized user. Subsequently, any authorized user could speak a further enrollment command to authorize an additional user. In some examples, subsequent enrollments can proceed with a voice enrollment command or without a voice enrollment command. In one example, subsequent enrollments can proceed in response to an authorized user selecting an enrollment option in a graphical user interface (GUI). For security reasons, in some examples, only authorized users are able to enroll additional users.

During the deployment stage, the speech diarization module 134 distinguishes between voices of various users. The speech diarization module 134 identifies the speaker of various commands and/or other speech detected by the speech diarization module 134. The speech diarization module 134 segregates the detected speech spoken by different users into different utterances. If, for example, a first user is speaking, and a second user speaks immediately after the first user finishes, the two utterances may not have a sufficient gap of silence in between in order for the virtual personal assistant module 138 to identify the speech as two separate utterances from two different users. By analyzing the voice features of the audio input signal 210, the speech diarization module 134 separates the audio input signal 210 into speech segments and determines that speech segments of the audio input signal 210 were spoken by the different users. Based on this data, the speech diarization module 134 segregates the audio input signal 210 into different utterances, a separate utterance for each of the users. Subsequently, the virtual personal assistant module 138 processes the two utterances separately.

The speech diarization module 134, includes, without limitation, a speech detection module 202, a segmentation module 204, and a clustering module 206. The speech detection module 202 receives an audio input signal 210 from an audio input device such as a microphone. The speech detection module 202 differentiates portions of the audio input signal 210 that contain human speech from portions of the audio input signal 210 that contain other audio, such as background noise, wind, vehicle noise, and/or the like. The speech detection module 202 isolates the human speech from the audio input signal 210 and discards the portion of the audio input signal 210 that does not contain human speech. In addition, the speech detection module 202 identifies periods of silence that represent gaps in the human speech. These periods of silence help identify where one speech segment ends and another speech segment begins. The speech detection module 202 generates an output that includes the detected human speech with non-human audio sources and background noise removed, and with data that identifies periods of silence.

The segmentation module 204 receives the human speech and data that identifies the periods of silence from the speech detection module 202. The segmentation module 204 separates the human speech into speech segments, where each speech segment represents human speech from a single user. The segmentation module 204 separates the human speech into speech segments based on the characteristics of the received human speech and on the periods of silence. As the segmentation module 204 processes the received human speech, the segmentation module 204 determines whether the voice features of the received human speech remain substantially the same, indicating that the same user is speaking, or whether the voice features of the received human speech have sufficiently changed, indicating that a different user is now speaking. If the segmentation module 204 determines that the voice features have sufficiently changed, the segmentation module 204 marks the end of the current speech segment at the time that the voice features changed. The segmentation module 204 starts a new speech segment at the time that the change in voice features was detected. The segmentation module 204 associates each speech segment with a particular user. If the segmentation module 204 determines that a speech segment is associated with a user that has previously enrolled and has been authorized, then the segmentation module 204 associates the speech segment with the user identifier of that authorized user. If, however, the segmentation module 204 determines that a speech segment is associated with a user that has not previously enrolled and has been authorized, then the segmentation module 204 associates the speech segment with a generic but unique user identifier of that non-authorized user. Additionally, if the segmentation module 204 determines that the speech input has stopped for a minimum period of time, the segmentation module 204 marks the end of the current speech segment at the time that the human speech was no longer detected. The segmentation module 204 starts a new segment when human speech is again detected.

The human speech can be from authorized users and/or from non-authorized users. In the case of authorized users, the segmentation module 204 identifies the user based on comparing the speech against the voice footprint data from the authorized users that was established during the enrollment stage. If the segmentation module 204 determines that the voice features extracted from the received human speech are a match with the stored voice features for a voice footprint of an authorized user, then the segmentation module 204 determines that received human speech was spoken by that authorized user. The voice features extracted from the received human speech are a match with the stored voice features for a voice footprint if the voice features extracted received human speech have a high degree of similarity with the stored voice features. As described herein, a high degree of similarity is determined when the voice features extracted from the received human speech differ from stored voice features by less than a threshold level, such as 10%, 20%, 25%, and/or the like. Additionally or alternatively, a high degree of similarity is determined when a cosine similarity between the voice features extracted from the received human speech and stored voice features by more than a threshold level, such as 0.75, 0.8, 0.9, and/or the like. The segmentation module 204 assigns the cluster with the user identifier of the authorized user and associates the cluster with the user identifier of the authorized user. If the segmentation module 204 determines that the voice features extracted from the received human speech does not have a high similarity with the stored voice features for the voice footprint of any authorized user, then the segmentation module 204 determines that received human speech was spoken by a nonauthorized user. In the case of non-authorized users, the segmentation module 204 separates the human speech into speech segments based on voice features identified as the human speech is received. If a particular cluster is spoken by a non-authorized user, then the segmentation module 204 assigns the cluster with a generic, but unique, user identifier of the non-authorized user and associates the cluster with the generic user identifier. The segmentation module 204 transmits the speech segments to the clustering module 206.

The clustering module 206 receives the speech segments from the segmentation module 204. The clustering module 206 groups the speech segments into clusters, where a cluster includes all of the speech segments spoken by a particular user. In general, the number of users who are speaking is less than the number of speech segments generated by the segmentation module. For example, a particular user may be speaking multiple times, or two users may be having a conversation where speech segments of the two users are interspersed over time. The clustering module 206 groups the speech segments spoken by the first user into a first cluster. The clustering module 206 groups the speech segments spoken by the second user into a second cluster. The clustering module 206 groups the speech segments spoken by additional users into additional clusters, where each cluster corresponds to a single user. When generating clusters, the clustering module 206 includes data that identifies periods of silence. In some examples, the data included in the cluster identifies two different types of silence. The first type of silence identifies periods of time when no user is speaking. This type of silence corresponds to the periods of silence identified by the speech detection module 202. The second of silence identifies periods of time when the user associated with the cluster is not speaking, but one or more other users are speaking.

The clustering module 206 identifies each cluster by user, based on the data received from the segmentation module 204. The clustering module 206 transmits the clusters as diarized audio 212 to the authorization and prioritization module 136.

The authorization and prioritization module 136 receives diarized audio 212 from the clustering module 206. For each cluster included in the diarized audio 212, the authorization and prioritization module 136 determines whether the cluster is identified as spoken by an authorized user or a non-authorized user. The authorization and prioritization module 136 allows clusters identified as spoken by an authorized user to pass through and be transmitted to the virtual personal assistant module 138 as part of the audio command queue 214. The authorization and prioritization module 136 processes clusters identified as spoken by a non-authorized user based on the mode of the speech processing system 200. In some examples, the speech processing system 200 operates in one of two modes: a guest mode and an authorized user mode. In guest mode, the authorization and prioritization module 136 allows all clusters in the diarized audio 212, irrespective of the speaker, to pass through and be transmitted to the virtual personal assistant module 138 as part of the audio command queue 214. As a result, the authorization and prioritization module 136 allows clusters identified as spoken by an authorized user and clusters identified as spoken by a non-authorized user to pass through and be transmitted to the virtual personal assistant module 138. In authorized user mode, the authorization and prioritization module 136 allows clusters identified as spoken by an authorized user to pass through and be transmitted to the virtual personal assistant module 138 as part of the audio command queue 214. However, the authorization and prioritization module 136 blocks clusters identified as spoken by a non-authorized user and does not allow those clusters to pass through. By blocking a cluster spoken by a non-authorized user, the speech processing system 200 blocks audio commands included in the cluster from executing. An authorized user can speak a command to switch the speech processing system 200 between guest mode and authorized user mode.

In some examples, the speech processing system 200 initiates in a default mode under certain conditions, such as at power on, after a system reset, and/or the like. The default mode is based on one or more characteristics of the speech processing system 200, such as the type of speech processing system 200, the place of installation of the speech processing system 200, a software application executed by the speech processing system 200, and/or the like. If the speech processing system 200 is a smart speaker installed in a residential home for general use, then the default mode can be guest mode so that all voice commands received from all nearby users are passed to the virtual personal assistant module 138 for further analysis and execution. If, however, the speech processing system 200 is an audio input device for a home security system installed in a residential home for general use, then the default mode can be authorized user mode so that the speech processing system 200 only processes and executes voice commands uttered by authorized users. The authorization and prioritization module 136 blocks commands spoken by non-authorized users, such as would-be burglars. If the speech processing system 200 is a navigation and security system installed in a vehicle, then the default mode can be authorized user mode so that the speech processing system 200 only processes and executes voice commands spoken by authorized users. The authorization and prioritization module 136 blocks commands spoken by non-authorized users, such as would-be car thieves, car-jackers, and muggers. Similarly, if a smartphone is executing a navigation software application, then the default mode can be authorized user mode so that the speech processing system 200 only processes and executes voice commands spoken by authorized users.

In some examples, the authorization and prioritization module 136 sets a priority for the clusters. In general, the virtual personal assistant module 138 processes the clusters in chronological order. Clusters representing audio commands spoken earlier in time are processed before clusters representing audio commands spoken later in time. The authorization and prioritization module 136 can change the order of processing by setting a priority for the clusters. In a home-based system, the authorization and prioritization module 136 can set the priority of clusters identified as spoken by parents at a higher priority. The authorization and prioritization module 136 can set the priority of clusters identified as spoken by children at a lower priority. In a vehicle-based system, the authorization and prioritization module 136 can set the priority of clusters identified as spoken by the driver at a higher priority. The authorization and prioritization module 136 can set the priority of clusters identified as spoken by passengers at a lower priority. The priority of the clusters can be assigned in any technically feasible fashion. In some examples, a first authorized user assigns the priority of each authorized user of the speech processing system 200. In so doing, the first authorized user assigns the priority of each authorized user based on various factors, such as the maturity of the authorized user, the role of the authorized user, the relationship of the authorized user with the authorized user, and/or the like. In some examples, the speech processing system 200 assigns a default priority to each user upon enrollment. The first authorized user to enroll could be assigned a relatively high priority. The second authorized user to enroll could be assigned a somewhat lower priority. The third authorized user to enroll could be assigned an even lower priority, and so on. Non-authorized users can be assigned a very low priority. The priority assigned to each user can be changed at any time, such as by speaking a priority changing command to the speech processing system 200. Based on these predetermined priorities, the authorization and prioritization module 136 sets the priority for each cluster based on the identifier for the cluster that identifies the authorized or non-authorized user who spoke the speech segments included in the cluster.

After determining which clusters are allowed to pass through and which clusters are blocked, and after setting the priority of each cluster, the authorization and prioritization module 136 generates an audio command queue 214 that includes the allowed clusters. The authorization and prioritization module 136 transmits the audio command queue 214 to the virtual personal assistant module 138.

The virtual personal assistant module 138 receives the audio command queue 214 from the authorization and prioritization module 136. The virtual personal assistant module 138 extracts the clusters from the audio command queue 214 and processes each cluster separately. Because each cluster is processed separately from other clusters, and because each cluster represents speech segments from a single user, the virtual personal assistant module 138 does not process speech segments spoken by two or more users as a single command. Further, the authorization and prioritization module 136 blocks clusters from non-authorized users when in authorized user mode. As a result, in authorized user mode, the virtual personal assistant module 138 processes only commands spoken by authorized users, thereby providing improved security and safety for the authorized users.

The virtual personal assistant module 138 processes the clusters in the audio command queue 214. In some examples, the virtual personal assistant module 138 processes the clusters in first-in first-out order based on the order in which the clusters are received from the authorization and prioritization module 136. The virtual personal assistant module 138 determines when one audio command present in a cluster ends and another audio command present in the same cluster begins based on various factors including the context of the words spoken, the duration of periods of silence when no users are speaking, the duration of periods of time when only other users are speaking, and/or the like. In some examples, the virtual personal assistant module 138 concurrently executes multiple instances of the virtual personal assistant. In such examples, the virtual personal assistant module 138 executes a different instance of the virtual personal assistant for each cluster represented in the audio command queue 214. As a result, the virtual personal assistant module 138 provides a separate virtual personal assistant for each user of the speech processing system 200.

In some examples, the virtual personal assistant module 138 employs one or more cloud services to execute the audio commands present in the clusters of the audio command queue 214. In such examples, the virtual personal assistant module 138 forwards the speech segments in a cluster, or a subset of the speech segments in the cluster, over a wired or wireless network to a virtual personal assistant cloud service. The virtual personal assistant cloud service processes the speech segments to extract one or more audio commands from the speech segments. The virtual personal assistant cloud service generates an output data stream that is responsive to the one or more audio commands. The virtual personal assistant cloud service transmits the output data over the wired or wireless network to the virtual personal assistant module 138.

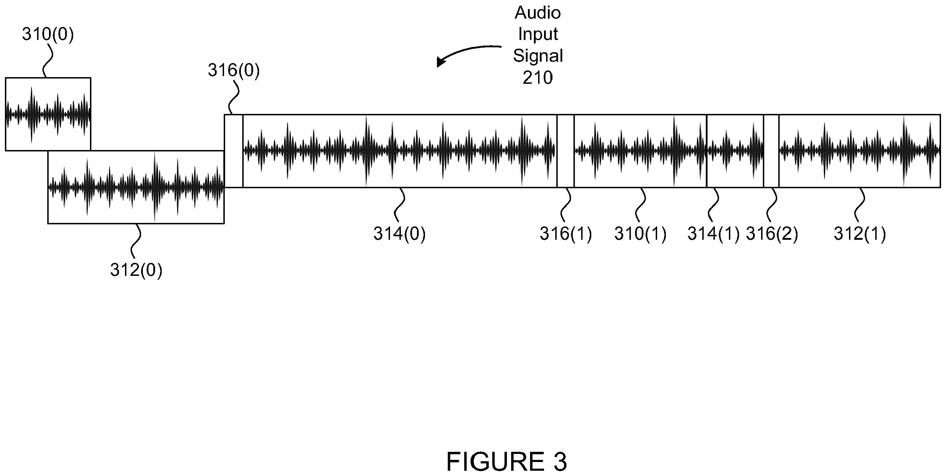

Figure 3 illustrates an audio input signal 210 directed towards the speech processing system 200 of Figure 2, according to various embodiments. As shown, the audio input signal 210 begins with a speech segment 310(0) from a first user. Prior to the end of speech segment 310(0), the audio input signal 210 includes a speech segment 312(0) from a second user. As a result, speech segment 310(0) and speech segment 312(0) overlap where the first user and the second user are speaking simultaneously. After the first user stops speaking, speech segment 310(0) ends and during the remainder of speech segment 312(0), only the second user is speaking. After the second user stops speaking, the audio input signal 210 includes a silent period 316(0) where no users are speaking. A third user then speaks, as shown by speech segment 314(0). After the third user stops speaking, the audio input signal 210 includes a second silent period 316(1) where no users are speaking. The audio input signal 210 then includes speech segment 310(1) spoken by the first user and speech segment 314(1) spoken by the third user, followed by a third silent period 316(2). The audio input signal 210 then includes speech segment 312(1) spoken by the second user.

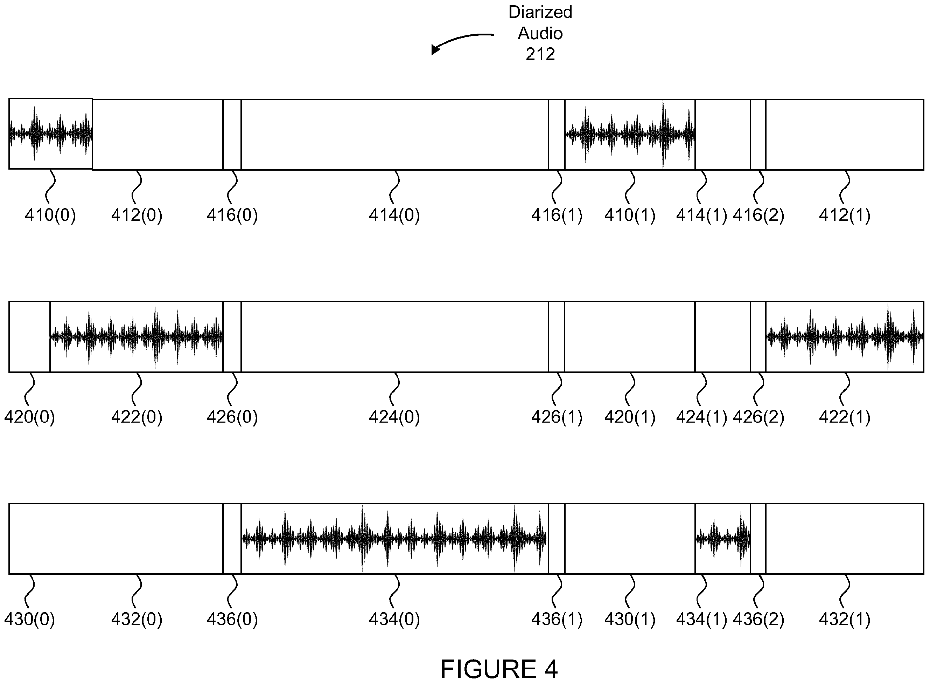

Figure 4 illustrates diarized audio 212 generated by the speech processing system 200 of Figure 2, according to various embodiments. As shown, the speech segments included in the audio input signal 210 of Figure 3 have been segmented and clustered into three clusters, one for each of the three users. As shown, a first cluster includes speech segments 410(0) and 410(1), spoken by the first user, corresponding to speech segment 310(0) and speech segment 310(1) of the audio input signal 210. Although a portion of the speech segment 310(0) spoken by the first user overlaps with a portion of the speech segment 312(0) spoken by the second user, speech segment 410(0) includes only the speech uttered by the first user. Silent periods 416(0), 416(1), and 416(2) correspond to silent periods 316(0), 316(1), and 316(2), respectively, when none of the users are speaking. Periods 412(0) and 412(1) represent periods of time when the second user is speaking but the first user is not speaking. Similarly, periods 414(0) and 414(1) represent periods of time when the third user is speaking but the first user is not speaking. As a result, the first cluster includes only the speech segments spoken by the first user. The first cluster further includes data identifying silent periods when no users are speaking as well as periods of time when the first user is not speaking but one or more other users are speaking.

As further shown, a second cluster includes speech segments 422(0) and 422(1), spoken by the second user, corresponding to speech segment 312(0) and speech segment 312(1) of the audio input signal 210. Although a portion of the speech segment 312(0) spoken by the second user overlaps with a portion of the speech segment 310(0) spoken by the first user, speech segment 422(0) includes only the speech uttered by the second user. Silent periods 426(0), 426(1), and 426(2) correspond to silent periods 316(0), 316(1), and 316(2), respectively, when none of the users are speaking. Periods 420(0) and 420(1) represent periods of time when the first user is speaking but the second user is not speaking. Similarly, periods 424(0) and 424(1) represent periods of time when the third user is speaking but the second user is not speaking. As a result, the second cluster includes only the speech segments spoken by the second user. The second cluster further includes data identifying silent periods when no users are speaking as well as periods of time when the second user is not speaking but one or more other users are speaking.

As further shown, a third cluster includes speech segments 434(0) and 434(1), spoken by the third user, corresponding to speech segment 314(0) and speech segment 314(1) of the audio input signal 210. Silent periods 436(0), 436(1), and 436(2) correspond to silent periods 316(0), 316(1), and 316(2), respectively, when none of the users are speaking. Periods 430(0) and 430(1) represent periods of time when the first user is speaking but the third user is not speaking. Similarly, periods 432(0) and 432(1) represent periods of time when the second user is speaking but the third user is not speaking. As a result, the third cluster includes only the speech segments spoken by the third user. The third cluster further includes data identifying silent periods when no users are speaking as well as periods of time when the third user is not speaking but one or more other users are speaking.

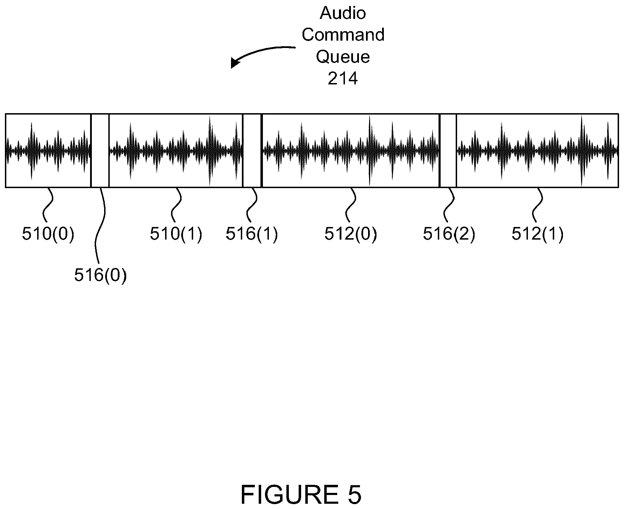

Figure 5 illustrates an audio command queue 214 generated by the speech processing system 200 of Figure 2, according to various embodiments. As shown, the audio command queue 214 includes speech segment 510(0) and speech segment 510(1), corresponding to speech segments 410(0) and 410(1), spoken by the first user and included in the first cluster of Figure 4. The first cluster is spoken by a first authorized user. Therefore, the first cluster is assigned with the user identifier of the first authorized user. Similarly, the audio command queue 214 further includes speech segment 512(0) and speech segment 512(1), corresponding to speech segment 422(0) and speech segment 422(1), spoken by the second user and included in the second cluster of Figure 4. The second cluster is spoken by a second authorized user. Therefore, the second cluster is assigned with the user identifier of the second authorized user. Speech segment 434(0) and speech segment 434(1) of Figure 4 were spoken by the third user, who was identified as a non-authorized user. Therefore, the second cluster is assigned with a generic, but unique, user identifier of the third non-authorized user. Because the speech processing system 200 is operating in authorized user mode, speech segment 434(0) and speech segment 434(1) are blocked and do not appear in the audio command queue 214. Silent period 516(0) includes any one or more of silent periods 416(0) and 416(1) when no one is speaking, time period 412(0) when the second user is speaking, and time period 414(0) when the third user is speaking. Silent period 516(1) represents a demarcation between the speech segments spoken by the first user and the speech segments spoken by the second user. Silent period 516(2) includes any one or more of silent periods 426(0), 426(1), and 426(2) when no one is speaking, time period 420(0) when the first user is speaking, and time periods 424(0) and 424(1) when the third user is speaking. As shown, the audio command queue includes audio commands spoken by the first user and the second user while excluding audio commands spoken by the third user. Further, the audio command queue 214 includes silent periods 516 so that the audio commands spoken by the first user and the second user can be properly processed.

In some examples, one or more of the silent periods 516(0), 516 (1), and 516(2) can be sufficiently long so as to indicate that the set of previous clusters are complete, and the speech processing system 200 should complete processing of a current set of clusters and identify speech segments for a set of subsequent clusters. In such cases, the speech processing system 200 determines that the speech segments from the set of previous clusters is complete and includes a first set of commands. Further, the speech processing system 200 determines that the speech segments from the set of subsequent clusters has begun. The speech processing system 200 thus determines that no audio commands include speech segments from both the set of previous clusters and the set of subsequent clusters.

In one example, a silent period 516 can include a time period when no user is speaking and the speech processing system 200 does not detect any human speech. If the duration of the silent period 516 is less than a first threshold amount, then the speech processing system 200 determines that one or more users are likely to speak in the near future and, possibly, issue a second portion of a voice command, where the user spoke the first portion of the voice command prior to the silent period 516. Therefore, if the duration of the silent period 516 is less than the first threshold amount, then the speech processing system 200 determines that the current set of clusters has not completed, and additional voice commands may be forthcoming.

If, however, the duration of the silent period 516 exceeds a second threshold amount, then the speech processing system 200 determines that the users are unlikely to speak a second portion of the voice command in the near future. Typically, the second threshold amount is greater than the first threshold amount. If the duration of the silent period 516 exceeds the second threshold amount, then the users may have stopped speaking. Therefore, if the duration of the silent period 516 is greater than the second threshold amount, then the speech processing system 200 determines that the current set of clusters has completed, and no additional voice commands are likely to be forthcoming. The speech processing system 200 then processes the voice commands present in the current set of clusters. If the speech processing system 200 subsequently detects human speech, then the speech processing system 200 considers this human speech to part of a new set of clusters. In this manner, the speech processing system 200 continuously forms and completes sets of clusters over time in order to process voice commands from various users in a timely manner.

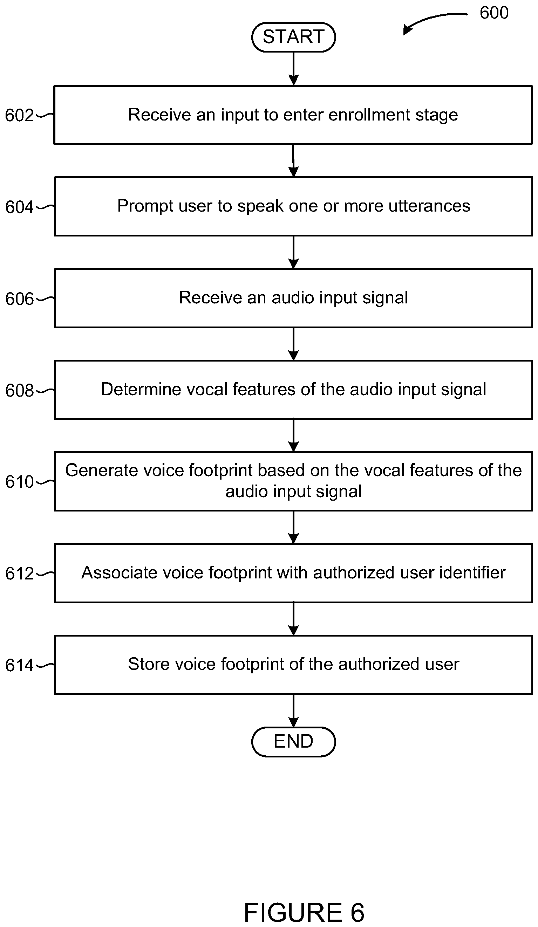

Figure 6 is a flow diagram of method steps for enrolling an authorized user of a speech processing system, according to various embodiments. Although the method steps are described in conjunction with the systems of Figures 1-5, persons skilled in the art will understand that any system configured to perform the method steps, in any order, is within the scope of the present disclosure.

As shown, a method 600 begins at step 602, where an enrollment module 132 receives an input to enter the enrollment mode. In some examples, the enrollment module 132 receives an input to enter the enrollment mode under certain conditions, such as at power on, after a system reset, and/or the like. In that regard, the enrollment module 132 could enter the enrollment stage automatically when powered up for the first time. Additionally or alternatively, the enrollment module 132 could enter the enrollment stage when an existing authorized user speaks an enrollment command such as "enroll another user," "initiate enrollment," and/or the like to start the enrollment phase for an additional user.

At step 604, the enrollment module 132 prompts the user to speak one or more utterances. The enrollment module 132 employs one or both of two types of enrollment: text dependent enrollment and text independent enrollment. With text dependent enrollment, the enrollment module 132 prompts the user to say a particular phrase as a fixed utterance multiple times. With text independent enrollment, the enrollment module 132 prompts the user to speak for a period of time. The user can speak any utterances, as long as the user speaks a sufficient amount of time for the enrollment module 132 to characterize the voice of the user.

At step 606, the enrollment module 132 receives an audio input signal via an audio input device, such as a microphone, as the user speaks the requested utterances. The enrollment module 132 processes the received audio input signal.

At step 608, the enrollment module 132 determines the vocal features of the audio input signal received at step 606. The enrollment module 132 determines these vocal features based on these unique voice features of the audio input signal.

At step 610, the enrollment module 132 generates a voice footprint based on the unique voice audio input signal. The enrollment module 132 employs various entropic techniques, such as mel-frequency cepstrum coefficients (MFCC) to generate voice footprints and subsequently identify a specific user from among authorized users. The enrollment module 132 fine tunes the voice footprint by analyzing the speech details and average voice features within the utterances in order to characterize the voice of the user.

At step 612, the enrollment module 132 associates the voice footprint with an authorized user identifier. The enrollment module 132 associates the voice footprint with the particular user who is in the process of enrolling. In so doing, the enrollment module 132 assigns a unique user identifier to the voice footprint and stores the user identifier with the voice footprint. Thereafter, when an incoming speech segment matches the voice footprint, the user who spoke the speech segment is identified via the user identifier assigned to the corresponding voice footprint.

At step 614, the enrollment module 132 stored the vocal footprint of the newly authorized user. After the user speaks the requisite phrase a sufficient number of times or if the user has spoken for a sufficient duration of time, the enrolment module 132 establishes and stores the voice footprint of the user. Once the user completes the enrollment stage, the user is considered an authorized user, also referred to herein as an enrolled user, also referred to herein as an authorized user.

The method 600 then terminates. Alternatively, the method 600 returns to step 604 to enroll additional authorized users.

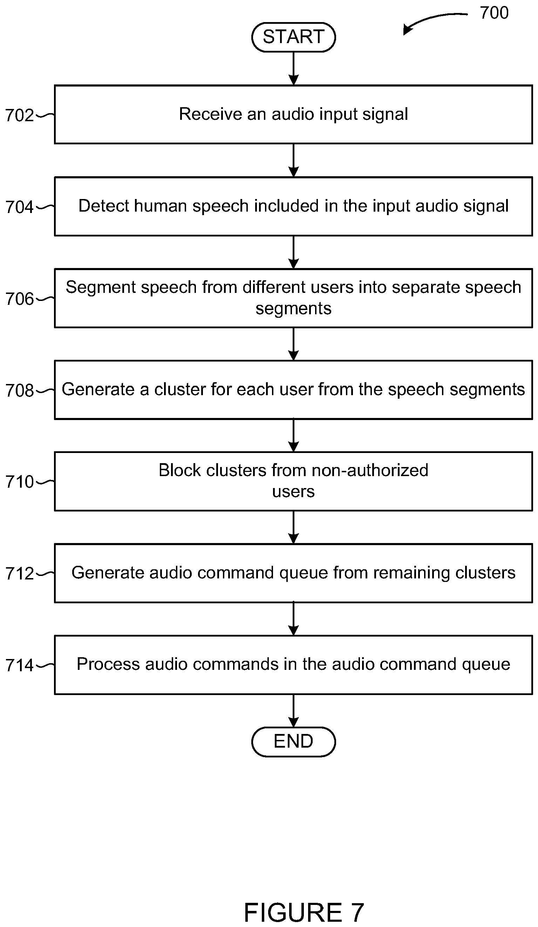

Figure 7 is a flow diagram of method steps for processing speech input directed towards a virtual personal assistant device, according to various embodiments. Although the method steps are described in conjunction with the systems of Figures 1-5, persons skilled in the art will understand that any system configured to perform the method steps, in any order, is within the scope of the present disclosure.

As shown, a method 700 begins at step 702, where a speech diarization module 134 executing on a speech processing system, such as the speech processing system 200 of Figure 2, receives an audio input signal via an audio input device, such as a microphone. The speech diarization module 134 processes the received audio input signal via a speech detection module 202, a segmentation module 204, and a clustering module 206 included in the speech diarization module 134.

At step 704, the speech detection module 202 detects human speech included in the audio input signal received at step 702. The speech detection module 202 differentiates portions of the audio input signal that contain human speech from portions of the audio input signal that contain other audio, such as background noise, wind, vehicle noise, and/or the like. The speech detection module 202 isolates the human speech from the audio input signal and discards the portion of the audio input signal 210 that does not contain human speech. In addition, the speech detection module 202 identifies periods of silence that represent gaps in the human speech. These periods of silence help identify where one speech segment ends and another speech segment begins. The speech detection module 202 generates an output that includes the detected human speech with non-human audio sources and background noise removed, and with data that identifies periods of silence.

At step 706, the segmentation module 204 segments speech from different users into speech segments. The segmentation module 204 receives the human speech and data that identifies the periods of silence from the speech detection module 202. The segmentation module 204 separates the human speech into speech segments, where each speech segment represents human speech from a single user. The segmentation module 204 separates the human speech into speech segments based on the characteristics of the received human speech and on the periods of silence. As the segmentation module 204 processes the received human speech, the segmentation module 204 determines the voice features of the human speech. If the segmentation module 204 determines that the voice features have sufficiently changed, the segmentation module 204 marks the end of the current speech segment at the time that the change in voice features was detected. The segmentation module 204 starts a new segment at the time that the change in voice features was detected. Additionally, if the segmentation module 204 determines that the speech input has stopped for a minimum period of time, the segmentation module 204 marks the end of the current speech segment at the time that the human speech was no longer detected. The segmentation module 204 starts a new segment when human speech is again detected. The segmentation module 204 determines whether voice features extracted from the current speech segment match a voice footprint associated with one of the authorized users. The voice features extracted from the received human speech are a match with the stored voice features for a voice footprint if the voice features extracted received human speech have a high degree of similarity with the stored voice features. As described herein, a high degree of similarity is determined when the voice features extracted from the received human speech differ from stored voice features by less than a threshold level, such as 10%, 20%, 25%, and/or the like. Additionally or alternatively, a high degree of similarity is determined when a cosine similarly between the voice features extracted from the received human speech and stored voice features by more than a threshold level, such as 0.75, 0.8, 0.9, and/or the like. If the segmentation module 204 determines that the voice features extracted from the current speech segment identify the speech segment as associated with an authorized user, then the segmentation module 204 assigns the speech segment with the user identifier of the authorized user. If the segmentation module 204 determines that the voice features extracted from the current speech segment do not match the voice footprint of any of the authorized users, then the segmentation module 204 determines that received human speech was spoken by a nonauthorized user. In such cases, the segmentation module 204 assigns the speech segment with a generic, but unique, user identifier of the non-authorized user and associates the speech segment with the generic user identifier.

At step 708, the clustering module 206 generates a cluster for each user from the speech segments generated at step 706. The clustering module 206 receives the speech segments from the segmentation module 204. The clustering module 206 groups the speech segments into clusters, where a cluster includes all of the speech segments spoken by a particular user. In general, the number of users who are speaking is less than the number of speech segments generated by the segmentation module. For example, a particular user may be speaking multiple times, or two users may be having a conversation where speech segments of the two users are interspersed over time. The clustering module 206 groups the speech segments spoken different users into different clusters, where each cluster corresponds to a single user. When generating clusters, the clustering module 206 includes data that identifies periods of silence. In some examples, the data included in the cluster identifies two different types of silence. The first type of silence identifies periods of time when no user is speaking. This type of silence corresponds to the silent periods of silence identified by the speech detection module 202. The second of silence identifies periods of time when the user associated with the cluster is not speaking, but one or more other users are speaking.

At step 710, an authorization and prioritization module 136 executing on the speech processing system blocks clusters from non-authorized users. By blocking a cluster spoken by a non-authorized user, the speech processing system 200 blocks audio commands included in the cluster from executing. Clusters generated by the clustering module 206 at step 708 are identified as being spoken by a particular user. For each cluster, the authorization and prioritization module 136 determines whether the cluster is identified as spoken by an authorized user or a non-authorized user. The clustering module 206 is assigned a user identifier based on the user identifier of the speech segments included in the cluster. If the user identifier assigned to the cluster matches an authorized user identifier, then the cluster is identified as spoken by an authorized user. If the user identifier assigned to the cluster does not match any authorized user identifier, and is instead a generic user identifier, then the cluster is identified as spoken by a nonauthorized user. The authorization and prioritization module 136 allows clusters identified as spoken by an authorized user to pass through and be transmitted to the virtual personal assistant module 138. The authorization and prioritization module 136 processes clusters identified as spoken by a non-authorized based on the mode of the speech processing system. In guest mode, the authorization and prioritization module 136 allows all clusters to pass through and be transmitted to the virtual personal assistant module 138. As a result, the authorization and prioritization module 136 allows clusters identified as spoken by an authorized user and clusters identified as spoken by a non-authorized user to pass through and be transmitted to the virtual personal assistant module 138. In authorized user mode, the authorization and prioritization module 136 allows clusters identified as spoken by an authorized user to pass through to the virtual personal assistant module 138. However, the authorization and prioritization module 136, when in authorized user mode, does not allow the clusters spoken by non-authorized users to pass through to the virtual personal assistant module 138.

At step 712, the authorization and prioritization module 136 generates an audio command queue 214 from the remaining (non-blocked) clusters. After determining which clusters are allowed to pass through and which clusters are blocked, the authorization and prioritization module 136 generates an audio command queue 214 that includes the allowed clusters. In some examples, the authorization and prioritization module 136 sets a priority for the clusters included in the audio command queue. The authorization and prioritization module 136 can sequence the clusters in the audio command queue 214 in any technically feasible manner, including, without limitation, the order that the clusters are received (FIFO order), in chronological order based on when the speech segments included in the clusters were spoken, an order based on the priority assigned to each cluster, and/or the like.

At step 714, a virtual personal assistant module 138 executing on the speech processing system executes the audio commands in the audio command queue 214. The virtual personal assistant module 138 extracts the clusters from the audio command queue and processes each cluster separately. The virtual personal assistant module 138 determines when one audio command present in a cluster ends and another audio command present in the same cluster begins based on various factors including the context of the words spoken, the duration of periods of silence when no users are speaking, the duration of periods of time when only other users are speaking, and/or the like. Because each cluster is processed separately from other clusters, and because each cluster represents speech segments from a single user, the virtual personal assistant module 138 does not process speech segments spoken by two or more users as a single command. Further, the authorization and prioritization module 136 blocks clusters from non-authorized users when in authorized user mode. As a result, in authorized user mode, the virtual personal assistant module 138 processes only commands spoken by authorized users, thereby providing improved security and safety for the authorized users.

The method 700 then terminates. Alternatively, the method 700 returns to step 702 to receive additional audio input signals and execute additional audio commands in the resulting audio command queue.

In sum, a speech processing system includes a virtual processing assistant that processes an audio input signal, where the audio signal includes speech input directed towards a virtual personal assistant device. The speech processing system receives and digitizes the audio input signal. The speech processing system detects the speech components of the digitized audio input signals, segments the speech components into distinct speech segments that originate from different users, and clusters the speech segments into a different cluster for each user. The speech processing system identifies and discards clusters corresponding to non-authorized users. The speech processing system prioritizes the remaining clusters and generates an audio command queue that presents the clusters in priority order for further processing. The speech processing system processes the audio command queue and executes the commands included therein.

At least one technical advantage of the disclosed techniques relative to the prior art is that with the disclosed techniques, a speech processing system is able to eliminate audio commands uttered by unintended sources. As a result, the likelihood that the speech processing system executes unintended or undesired audio commands is reduced relative to conventional systems. Further, the speech processing system is able to discard speech from non-authorized users, which provides improved security and safety for the authorized user relative to conventional systems. These technical advantages represent one or more technological improvements over prior art approaches.
1. In some embodiments, a computer-implemented method for processing audio commands for a virtual personal assistant comprises: segmenting speech detected in an audio input signal into a plurality of speech segments wherein the speech included in a given speech segment is uttered by a single speaker; clustering the speech segments included in the plurality of speech segments into a plurality of clusters, wherein each cluster included in the plurality of clusters is uttered by a different speaker; determining that a first cluster included in the plurality of clusters is uttered by a first authorized speaker; and causing a first audio command included in the first cluster to execute.
2. The computer-implemented method according to clause 1, further comprising: determining that a second cluster included in the plurality of clusters is uttered by a second authorized speaker; and causing a second audio command present in the second cluster to execute.
3. The computer-implemented method according to clause 1 or clause 2, further comprising: determining that a second cluster included in the plurality of clusters and uttered by a second authorized speaker has a higher priority than the first cluster; and causing a second audio command present in the second cluster to execute before the first audio command executes.
4. The computer-implemented method according to any of clauses 1-3, further comprising: determining that a second cluster included in the plurality of clusters is uttered by a non-authorized speaker; and preventing a second audio command included in the second cluster from executing.
5. The computer-implemented method according to any of clauses 1-4, further comprising: determining that a second cluster included in the plurality of clusters is uttered by a non-authorized speaker; determining that a mode is activated that allows audio commands from non-authorized speakers to execute; and causing a second audio command included in the second cluster to execute.
6. The computer-implemented method according to any of clauses 1-5, wherein determining that the first cluster is uttered by the first authorized speaker comprises: comparing one or more voice features associated with a first speech segment included in the first cluster with a plurality of voice footprints associated with a plurality of authorized speakers; and determining that the one or more voice features associated with the first speech segment match a first voice footprint included in the plurality of voice footprints that is associated with the first authorized speaker.
7. The computer-implemented method according to any of clauses 1-6, further comprising: prompting the first authorized speaker to speak one or more utterances; receiving an audio input signal of the first authorized speaker speaking the one or more utterances; determining one or more voice features of the first authorized speaker based on the audio input signal; generating a voice footprint associated with the first authorized speaker based on the one or more voice features; and storing the voice footprint of the first authorized speaker.
8. The computer-implemented method according to any of clauses 1-7, further comprising: generating a user identifier for the first authorized speaker; and associating the user identifier with the voice footprint.
9. The computer-implemented method according to any of clauses 1-8, wherein the one or more utterances comprise a fixed utterance spoken by the first authorized speaker a specified number of times.
10. The computer-implemented method according to any of clauses 1-9, wherein the one or more utterances comprise an utterance spoken by the first authorized speaker for a specified duration of time.
11. In some embodiments, a device comprises: a microphone; one or more memories storing instructions; and one or more processors coupled to the one or more memories and, when executing the instructions: segment speech detected in an audio input signal received via the microphone into a plurality of speech segments wherein the speech included in a given speech segment is uttered by a single speaker; cluster the speech segments included in the plurality of speech segments into a plurality of clusters, wherein each cluster included in the plurality of clusters is uttered by a different speaker; determine that a first cluster included in the plurality of clusters is uttered by a first authorized speaker; and cause a first audio command included in the first cluster to execute.
12. The device according to clause 11, wherein the one or more processors further: determine that a second cluster included in the plurality of clusters is uttered by a second authorized speaker; and cause a second audio command present in the second cluster to execute.
13. The device according to clause 11 or clause 12, wherein the one or more processors further: determine that a second cluster included in the plurality of clusters and uttered by a second authorized speaker has a higher priority than the first cluster; and cause a second audio command present in the second cluster to execute before the first audio command executes.
14. The device according to any of clauses 11-13, wherein the one or more processors further: determine that a second cluster included in the plurality of clusters is uttered by a non-authorized speaker; and prevent a second audio command included in the second cluster from executing.
15. The device according to any of clauses 11-14, wherein the one or more processors further: determine that a second cluster included in the plurality of clusters is uttered by a non-authorized speaker; determine that a mode is activated that allows audio commands from non-authorized speakers to execute; and cause a second audio command included in the second cluster to execute.
16. The device according to any of clauses 11-15, wherein, to determine that the first cluster is uttered by the first authorized speaker, the one or more processors further: compare one or more voice features associated with a first speech segment included in the first cluster with a plurality of voice footprints associated with a plurality of authorized speakers; and determine that the one or more voice features associated with the first speech segment match a first voice footprint included in the plurality of voice footprints that is associated with the first authorized speaker.
17. The device according to any of clauses 11-16, wherein the one or more processors further: prompt the first authorized speaker to speak one or more utterances; receive an audio input signal of the first authorized speaker speaking the one or more utterances; determine one or more voice features of the first authorized speaker based on the audio input signal; generate a voice footprint associated with the first authorized speaker based on the one or more voice features; and store the voice footprint of the first authorized speaker.
18. In some embodiments, one or more non-transitory computer-readable media store program instructions that, when executed by one or more processors, cause the one or more processors to perform steps of: segmenting speech detected in an audio input signal into a plurality of speech segments wherein the speech included in a given speech segment is uttered by a single speaker; clustering the speech segments included in the plurality of speech segments into a plurality of clusters, wherein each cluster included in the plurality of clusters is uttered by a different speaker; determining that a first cluster included in the plurality of clusters is uttered by a first authorized speaker; and causing a first audio command included in the first cluster to execute.
19. The one or more non-transitory computer-readable media according to clause 18, wherein the steps further comprise: determining that a second cluster included in the plurality of clusters is uttered by a second authorized speaker; and causing a second audio command present in the second cluster to execute.
20. The one or more non-transitory computer-readable media according to clause 18 or clause 19, wherein the steps further comprise: determining that a second cluster included in the plurality of clusters and uttered by a second authorized speaker has a higher priority than the first cluster; and causing a second audio command present in the second cluster to execute before the first audio command executes.

Any and all combinations of any of the claim elements recited in any of the claims and/or any elements described in this application, in any fashion, fall within the contemplated scope of the present invention and protection.

The descriptions of the various embodiments have been presented for purposes of illustration, but are not intended to be exhaustive or limited to the embodiments disclosed. Many modifications and variations will be apparent to those of ordinary skill in the art without departing from the scope and spirit of the described embodiments.

Aspects of the present embodiments may be embodied as a system, method or computer program product. Accordingly, aspects of the present disclosure may take the form of an entirely hardware embodiment, an entirely software embodiment (including firmware, resident software, micro-code, etc.) or an embodiment combining software and hardware aspects that may all generally be referred to herein as a "module," a "system," or a "computer." In addition, any hardware and/or software technique, process, function, component, engine, module, or system described in the present disclosure may be implemented as a circuit or set of circuits. Furthermore, aspects of the present disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Aspects of the present disclosure are described above with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine. The instructions, when executed via the processor of the computer or other programmable data processing apparatus, enable the implementation of the functions/acts specified in the flowchart and/or block diagram block or blocks. Such processors may be, without limitation, general purpose processors, special-purpose processors, application-specific processors, or field-programmable gate arrays.

The flowchart and block diagrams in the figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

While the preceding is directed to embodiments of the present disclosure, other and further embodiments of the disclosure may be devised without departing from the basic scope thereof, and the scope thereof is determined by the claims that follow.

## Claims

1. A computer-implemented method for processing audio commands for a virtual personal assistant, the method comprising:
segmenting speech detected in an audio input signal into a plurality of speech segments wherein the speech included in a given speech segment is uttered by a single speaker;
clustering the speech segments included in the plurality of speech segments into a plurality of clusters, wherein each cluster included in the plurality of clusters is uttered by a different speaker;
determining that a first cluster included in the plurality of clusters is uttered by a first authorized speaker; and
causing a first audio command included in the first cluster to execute.

2. The computer-implemented method of claim 1, further comprising:
determining that a second cluster included in the plurality of clusters is uttered by a second authorized speaker; and
causing a second audio command present in the second cluster to execute.

3. The computer-implemented method of claim 1 or 2, further comprising:
determining that a second cluster included in the plurality of clusters and uttered by a second authorized speaker has a higher priority than the first cluster; and
causing a second audio command present in the second cluster to execute before the first audio command executes.

4. The computer-implemented method of any preceding claim, further comprising:
determining that a second cluster included in the plurality of clusters is uttered by a non-authorized speaker; and
preventing a second audio command included in the second cluster from executing.

5. The computer-implemented method of any preceding claim, further comprising:
determining that a second cluster included in the plurality of clusters is uttered by a non-authorized speaker;
determining that a mode is activated that allows audio commands from non-authorized speakers to execute; and
causing a second audio command included in the second cluster to execute.

6. The computer-implemented method of any preceding claim, wherein determining that the first cluster is uttered by the first authorized speaker comprises:
comparing one or more voice features associated with a first speech segment included in the first cluster with a plurality of voice footprints associated with a plurality of authorized speakers; and
determining that the one or more voice features associated with the first speech segment match a first voice footprint included in the plurality of voice footprints that is associated with the first authorized speaker.

7. The computer-implemented method of any preceding claim, further comprising:
prompting the first authorized speaker to speak one or more utterances;
receiving an audio input signal of the first authorized speaker speaking the one or more utterances;
determining one or more voice features of the first authorized speaker based on the audio input signal;
generating a voice footprint associated with the first authorized speaker based on the one or more voice features; and
storing the voice footprint of the first authorized speaker.

8. The computer-implemented method of claim 7, further comprising:
generating a user identifier for the first authorized speaker; and
associating the user identifier with the voice footprint.

9. The computer-implemented method of claim 7 or 8, wherein the one or more utterances comprise a fixed utterance spoken by the first authorized speaker a specified number of times.

10. The computer-implemented method of claim 7, 8 or 9, wherein the one or more utterances comprise an utterance spoken by the first authorized speaker for a specified duration of time.

11. A device, comprising:
a microphone;
one or more memories storing instructions; and
one or more processors coupled to the one or more memories and, when executing the instructions:
segment speech detected in an audio input signal received via the microphone into a plurality of speech segments wherein the speech included in a given speech segment is uttered by a single speaker;
cluster the speech segments included in the plurality of speech segments into a plurality of clusters, wherein each cluster included in the plurality of clusters is uttered by a different speaker;
determine that a first cluster included in the plurality of clusters is uttered by a first authorized speaker; and
cause a first audio command included in the first cluster to execute.

12. The device of claim 11, wherein the one or more processors further:
determine that a second cluster included in the plurality of clusters and uttered by a second authorized speaker has a higher priority than the first cluster; and
cause a second audio command present in the second cluster to execute before the first audio command executes.

13. The device of claim 11 or 12, wherein the one or more processors further:
determine that a second cluster included in the plurality of clusters is uttered by a non-authorized speaker; and
prevent a second audio command included in the second cluster from executing.

14. The device of claim 11, 12 or 13, wherein the one or more processors further:
determine that a second cluster included in the plurality of clusters is uttered by a non-authorized speaker;
determine that a mode is activated that allows audio commands from non-authorized speakers to execute; and
cause a second audio command included in the second cluster to execute.

15. One or more non-transitory computer-readable media storing program instructions that, when executed by one or more processors, cause the one or more processors to perform steps of the method of any of claims 1 to 10.
